# EUROPEAN PATENT SPECIFICATION

(11) **EP 1 379 376 B1**
(45) Date of publication and mention of the grant of the patent: **28.12.2005**
(21) Application number: 02726288.0
(22) Date of filing: 08.05.2002
(51) Int. Cl.: B29C 70/46, B29C 70/54, B32B 27/12

(54) **MOULDING MATERIAL WITH VENTILATING STRUCTURE FOR ENTRAPPED GASES**
FORMMASSEN MIT VENTILATIONSSTRUKTUR FÜR EINGESCHLOSSENE GASE
MATERIAU DE MOULAGE

(30) Priority: 09.05.2001 GB 0111278; 27.12.2001 GB 0130965
(43) Date of publication of application: 14.01.2004
(73) Proprietor: Structural Polymer Systems Ltd., Newport, Isle of Wight PO30 5WU (GB)
(72) Inventor: JONES, Daniel, Thomas, Isle of Wight PO31 7AH (GB)
(74) Representative: Pols, Ronald Maarten
(86) International application number: PCT/GB2002/002055
(87) International publication number: WO 2002/090089

(56) References cited:
- EP-A- 0 496 518
- EP-A- 0 695 626
- WO-A-00/27632
- WO-A-02/28624
- DE-A- 3 220 768
- US-A- 4 238 437
- US-A- 4 622 091
- US-A- 5 104 718

## Description

The present invention relates to a moulding material, particularly but not exclusively to a moulding material comprising a uni-directional fibrous reinforcement material.

Composite moulding materials comprise a resin material and a fibrous reinforcement material. The viscosity of the resin material is strongly influenced by the resin temperature. During processing, on heating the resin, the resin viscosity drops, allowing it to flow around the fibrous reinforcement material. However, as the resin material is heated beyond a certain point (activation temperature), the catalysts within it begin to react and the cross linking reaction of the resin molecules accelerates. The progressive polymerisation increases the viscosity of the resin until it has passed a point beyond which it will not flow at all ('no flow point') . To further promote the flow of the resin material into the reinforcement material, pressure is applied to the moulding formed from the composite moulding material. Often, pressure is applied by the application of vacuum pressure to the moulding.

Historically, moulded articles or mouldings were formed from a resin material either on its own or reinforced with a fibrous reinforcement material. Although the products thus formed were satisfactory, it was difficult to guarantee the quality of the product due to the difficulty in controlling the ratio of the resin material to the fibrous reinforcement material. Another problem encountered in these materials was the entrapment of volatile gases during processing and curing of the material which caused voids in the cured laminate. The process was therefore refined such that the supplier of the resin provided the producer of the moulded article with a preform or pre-fabricated moulding material comprising reinforcement materials which were pre-impregnated with a resin material. These moulding materials are known as prepregs.

The prepreg moulding material allowed the fabricator to produce moulded articles of a consistent quality. The prepreg material also enabled the fabricator to lay up a combined layer of reinforcement fibrous material and resin material at once.

A problem associated with prepreg materials is that voids occur in the cured product due to the presence of intra- and inter-laminar gases which become trapped during processing of the prepreg material. The voids in moulded products are roughly divided into two groups, namely intralayer voids which develop within respective prepreg layers due to the presence of intra-laminar gases and/or air (i.e. gases trapped within individual prepreg layers of a laminate structure), and interlayer voids which develop between prepreg layers due to the presence of interlaminar gases (i.e. gases trapped between prepreg layers). The causes of the development of both interlayer voids and intralayer voids include volatile matters resulting from water and solvents contained in the prepreg resin, bubbles formed from air which has remained in the resin, etc.. The predominant cause of interlayer voids is conceivably accumulated air which has been taken in between the prepreg layers during lamination and left behind there. This air is easily trapped between the tacky external surfaces of the prepreg layers during the lay-up of the prepreg. Such voids can result in the laminate having poor structural properties and can lead to premature failure of the composite material. Further, these voids result in a poor cosmetic quality finish of the cured product.

US-A-5104718 (Asada etal.) discloses a unidirectionally paralleled fiber reinforced thermo-setting resin prepreg having plural grooves arranged continuously in longitudinal direction on at least one side surface thereof. The grooves enable the passage of air during moulding and hence no accumulation of interlaminar air occurs. Also, at the time of moulding, the grooves serve as the passage of resin containing volatile matters and air and, together with the help of lateral shift of fibres surrounding the grooves, ultimately give a good moulded product free from interlayer voids (col. 3, lines 1 to 6) .

The material as disclosed in US-A-5104718 has several important disadvantages. The grooves only act as conduits to interlaminar gases and air. Intralaminar voids therefore still occur. Furthermore, as the grooves are located on the external surface of a prepreg layer, the grooves get clogged and thus blocked. Also, if too much pressure is applied on the prepreg layer during lay-up, the grooves distort which affects venting via the grooves. Also, if the grooves are too shallow or if they have the wrong shape, they get clogged immediately when a further prepreg layer is located thereon. If the groove is too deep, the prepreg has a lower lateral strength and is liable to tear. Also, the groove affects the cosmetic quality of the moulding as it is present on the moulded surface. Finally, the process of forming a grooved prepreg material is complicated and generally expensive as it requires an extra groove applying step after preimpregnation of the reinforcement material.

We have discovered that the above problems can be largely reduced or overcome by a moulding material comprising a layer of resin material and conjoined to at least one surface thereof a fibrous layer, the fibrous layer allowing entrapped laminar gases to pass out of the material during processing of the material. Upon curing of this breathable moulding material, entrapped gases escape via the dry reinforcement layer, which prevents these voids from occurring. This material is disclosed in more detail in WO 00/27632 (Ness et al).

DE-A-3220768 (Pelz) discloses a process for manufacturing a moulding from a fibrous non-woven material provided with a decorative surface layer.

WO 02/28624 (Jones et al) discloses a sheeted moulding compound comprising multiple layers.

We have also discovered that the quality of the cured product depends on the processing conditions of the moulding material. To process a breathable moulding material, the processing conditions must be carefully controlled to prevent gases and air from being trapped in the material.

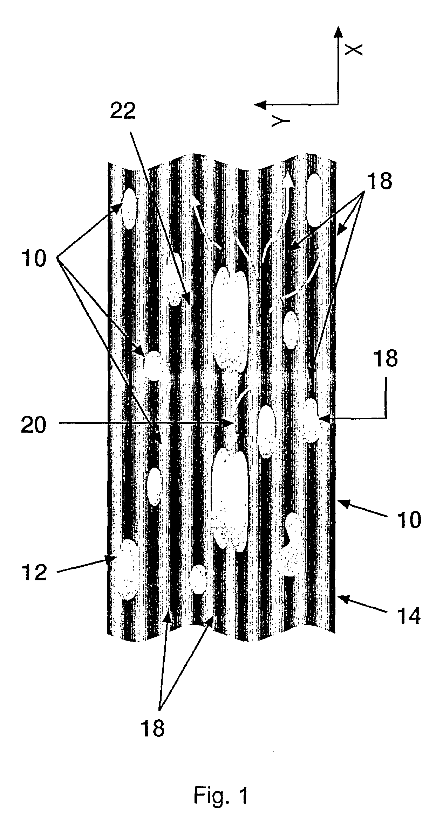

This is particularly important for breathable moulding materials which comprise uni-directional fibrous reinforcement layers. In Figure 1 of the drawings, a diagrammatic plan view is presented of a preform moulding material 10 comprising a layer of a resin material 12 sandwiched between layers of a uni-directional fibrous reinforcement material 14. As the moulding material starts to wet out during processing, areas 18 of the uni-directional fibre become trapped off or blocked by the resin 12 so that no air transport can occur in directions along the reinforcement fibre and perpendicular to the reinforcement fibre (x, y - direction and z-direction). Any residual laminar gases inside the fibre tows of the uni-directional material 14 get locked inside the tows 20 which results in interlayer and intralayer void areas in the cured product.

This problem can occur for a wide range of moulding materials with both woven and unwoven reinforcement layers. However in woven and stitched venting (breathable) moulding materials the problem occurs less frequently. Although we do not wish to be bound by any theory, we believe that both woven and stitched reinforcement material layers provide transport of gases within the plane of the reinforcement materials. Gases are therefore less likely to be trapped by the resin during processing of the material. However, the processing conditions of these materials must also be carefully controlled to prevent gas entrapment.

Problems of gas entrapment in moulding materials with venting properties are particularly present during curing of moulding materials which comprise one or more layers of a uni-directional fibrous reinforcement material or a non-uniform fibrous reinforcement material.

It is therefore desirable to provide an improved moulding material and a method of forming said moulding material, for a more efficient fabrication of moulded articles with a minimal void content, thereby addressing the above-described problems and/or which offers improvements generally.

In embodiments of the present invention, there are provided a moulding material, a resin material, a method of manufacturing a moulding material, a method of manufacturing a resin material and a moulded article as defined in the accompanying claims.

In an embodiment of the invention, there is provided a preform multi-layered moulding material comprising a layer of a reinforcement material, and a layer of a resin material, the resin material layer comprising a first venting structure to allow interlaminar and intralaminar gases to pass out of said moulding material via the reinforcement layer during processing. The resin layer thus acts as a conduit for both interlaminar gases and intralaminar gases which are conducted via the resin layer out of the material via the reinforcement layer. In this way, it is achieved that any entrapped inter- and intra-laminar gases can escape via the resin material layer during processing of said material. Any entrapped gases can further escape from fibre tow to fibre tow via a transverse venting route formed by the venting structure. This also prevents the formation of interlaminar and intralaminar voids in the cured product.

In a further embodiment of the invention, the first venting structure may comprise passages or venting channels. These venting channels allow interlaminar and intralaminar gases to be conducted out of the moulding material via these channels. The venting channels act as conduits for any gases within the resin layer and connect fibres in the reinforcement material via transverse venting routes from fibre to fibre. The conduits provide additional venting routes to any entrapped gases, so that these gases can also escape from the moulding material. The venting channels may extend over the full thickness of the resin material layer. During processing, as the reinforcement material is locally closed off by the resin material, the venting channels connect these pockets to allow the gases to escape the moulding material via the resin layer. This prevents entrapped gas pockets

In an embodiment of the invention, the venting structure may be adapted to vent the resin layer in one or more directions. The venting structure may be adapted to be connected to a suitable gas extraction means. A suitable gas extraction means may comprise a vacuum pump in combination with vacuum consumables such as a vacuum bag etc.

In another embodiment, the venting channels may extend substantially in a plane perpendicular to the resin layer. Preferably, the venting channels extend from one side of the resin layer across said layer through to the other side of the resin layer. The venting channels may further extend in a direction which is approximately parallel to the resin layer. In a preferred embodiment, the venting channels may extend from one side of the resin film across the resin film through to the other side of the resin film whereby the end portions of the venting channels are offset relative to one another on either side of the resin layer, so as to maximise the length and volume of the venting channel. This promotes the flow of any laminar gases and entrapped gases out of the moulding material during processing. Preferably, the venting channels extend from one side of the resin layer across the resin layer to the other side of the resin layer in a zig-zag type fashion. This particular shape of the venting channels allows adequate venting of the areas closed off by the resin during processing, since the zig-zag type channels extend over an as large as possible volume within the resin layer.

In yet another embodiment of the inventions, the resin material layer may be discontinuous with the discontinuities forming the venting passages or channels. In a further embodiment of the invention the resin layer may comprise venting channels defined between lengthwise extending strips of resin material. The strips may extend in a non-linear lengthwise format. The resin strips may be at an approximate angle of 45° or any other suitable angle relative to the direction of the fibres in the reinforcement layer. The strips may be arranged approximately parallel to one another.

In another embodiment of the invention, the first venting structure may comprise venting channels or passages which extend substantially in a plane parallel to the reinforcement layer. The venting structure may be formed by a discontinuous resin layer. The discontinuous resin layer may comprise patches, strips or small areas of resin which are located on the reinforcement material.

In a further embodiment of the inventions, the reinforcement layer may comprise a further venting structure for allowing gases to pass out of said moulding material via the reinforcement layer during processing. The further venting structure may be formed by the reinforcement layer. The reinforcement material may be dry (unimpregnated by the resin) or at least partially dry (partially unimpregnated by the resin) to allow gases to be vented out via the reinforcement layer. In embodiments of the inventions, the moulding material may comprise one or more resin layers and one or more reinforcement layers. The reinforcement material may be conjoined to the surface of the resin material so as to provide a substantially unimpregnated reinforcement layer.

In yet another embodiment of the inventions, there is provided a resin material comprising a venting structure for allowing gases to pass out of said resin material during processing of the material. The resin material may be in the form of a film or a layer. The resin film may be applied to any suitable reinforcement layer to form a moulding material. The reinforcement material may comprise a non-woven reinforcement material such as a unidirectional non-woven reinforcement material. The reinforcement material may also comprise a woven reinforcement material. A further reinforcement material layer may be applied to the resin layer to form the moulding material. In a preferred embodiment, the resin layer may be sandwiched between the reinforcement material layers.

In another embodiment of the invention, the reinforcement layers are held in place on the resin layer by the inherent tack of the resin material. This obviates the need for stitching, adhesive or binder materials for keeping the moulding material integral during transport and handling including lay-up. This property of the material is particularly useful when the reinforcement material comprises non-woven reinforcement fibres such as uni-directional fibres as no stitching of the material is necessary which would otherwise affect the quality and mechanical properties of the moulding material.

In an embodiment, the cosmetic surface quality of the moulding material as hereinbefore described is high in comparison to conventional moulding materials. The first venting structure and/or further venting structure may enable the resin material to completely wet the mould surface during processing whereby any entrapped air and laminar gases which may be located between the mould surface and the moulding material can escape via the venting structure. Gases may thus escape via the venting structures as provided in the resin layer and/or the reinforcement layer.

In a further embodiment of the inventions, there is provided a method of forming or manufacturing a moulding material as hereinbefore described. The method may comprise the steps of providing a resin material and a means for forming venting channels inside the resin material, the method further comprising the step of forming the venting channels in the resin material to form the gas permeable resin material. The method may further comprise the step of providing means for decreasing the viscosity of the resin material before the venting channels are formed so that the permeating means can permeate the resin material to form the venting channels.

In yet another embodiment of the invention, there is provided a method of forming or manufacturing a permeable resin film comprising the steps of providing a resin film, providing a heating means for increasing the temperature of said resin film thereby decreasing the viscosity of the resin, and providing a means for providing venting channels inside said resin film, said method further comprising the steps of increasing the temperature of said resin film below the temperature for processing the film and piercing said resin film to form said permeable resin film. The venting structure may be provided by piercing means such as comb or needles or some other suitable means.

In an alternative embodiment, after heating and mixing, the resin material may be cast onto a suitable carrier means. Suitable carrier means may comprise a silicon coated carrier member, silicon backing paper or a carrier member comprising a PTFE material. Since the resin film is still at a raised temperature after casting, a means may permeate the film to form a gas permeable resin film. The resin may also be located onto the carrier member as a discontinuous layer, for example in the form of strips of resin material.

In an embodiment of the inventions, a supply means may continuously supply a resin layer towards a venting means for making a gas permeable structure within the resin layer. The venting means continuously applies a venting structure in the resin layer. In a preferred embodiment, the resin film is continuously provided on a transport member, such as a conveyor belt, towards the venting member. The venting or piercing member, which is in contact with the resin film layer, is continuously movable in a direction perpendicular to the direction of travel of the resin film layer. In this way the venting structure is formed.

In a particular embodiment the venting member comprises a comb which extends through the resin layer and which may be movable in a direction perpendicular to the direction of transport of the resin layer. The resin material is at a temperature whereby the viscosity of the resin is reduced and whereby no curing of the resin material occurs. The viscosity of the resin material is selected such that the viscosity is high enough to prevent the venting channel from closing due to the flow of the resin material, and the viscosity is low enough to prevent too much pressure from being exerted on the comb and to prevent the resin material from clogging the comb.

The resin film is preferably provided on a backing material to support the resin film during handling and application of the venting structure. The backing material may comprise a silicon paper. Alternatively, the resin material may be located on a conveyer belt such as a PTFE belt which supports the material during transport and handling.

In yet another embodiment of the inventions, there is provided a method for forming a moulding material, comprising the steps of providing a layer of a permeable resin material, and providing a fibrous reinforcement layer, said method further comprising the steps of locating said reinforcement layer in relation to said permeable resin layer to form said moulding material.

There is thus provided a moulding material, a resin material, a method of manufacturing a moulding material, a method of manufacturing a permeable resin material, and an article according to the embodiments of the invention.

We have discovered that moulding materials with an air venting structure, and particularly air venting moulding materials comprising layers of uni-directional reinforcement material, are difficult to process if the processing conditions cannot be carefully controlled. Air is then trapped inside the cured product.

We have discovered that by the creation of gaps which are located inside the reinforcement resin film, entrapped gases can be transported in both horizontal and vertical directions (in both a plane parallel to the resin layer and in a plane perpendicular to the plane of resin layer). The permeable resin film material with gaps or venting channels can be applied as a resin layer to any moulding material and to any other composite materials to enable or improve venting of interlaminar and intralaminar gases.

Preferably, the permeable reinforcement resin material is applied to moulding materials comprising unidirectional reinforcement layers, since these layers are generally difficult to process due to air blocks or traps which can occur in the unidirectional fibrous layers.

We have also discovered that the moulding material as hereinbefore described has a better cosmetic surface quality in comparison to conventional moulding materials. The venting structure improves venting of air, inter- and intralaminar gases. This enables the resin to completely wet out the mould surface during processing. Upon curing, this results in the enhanced cosmetic surface quality.

Venting of the moulding material can further be improved by a discontinuous resin layer. The resin layer may comprise discontinuous strips or areas of a resin material. This greatly enhances venting of the moulding material during processing and promotes flow of the resin material. This prevents the problem of trapped venting paths from occurring.

The preform moulding material as hereinbefore described has the advantage that it prevents both intralayer voids and interlayer voids from occurring. This results in a void-free moulded product of a superior mechanical and cosmetic quality. The preform moulding material is dry to touch which simplifies handling of the material in comparison with conventional prepregs. Furthermore, since the first and further venting structures are situated within the moulding material, the structures are robust and not affected by accidental clogging or blockage. Also, the moulding material is cost-effectively and production is uncomplicated.

The preform multi-layered moulding material preferably comprises a layer of a resin material sandwiched between layers of reinforcement material. The reinforcement material comprises a further venting structure. The moulding material is easy to handle due to the absence of resin on the external surface of the material. If locally external surface tack is necessary, for example for applying the moulding material on a vertical surface or standing part of the mould or moulding, local pressure is applied to the material so as to locally impregnate the reinforcement material. In this way, local areas of the material are provided with external surface tack.

The invention will now be described by way of example only, and with reference to the accompanying drawings, in which:
Figure 1 presents a conventional moulding material comprising unidirectional fibres (UD moulding material) in a diagrammatic plan view, and;

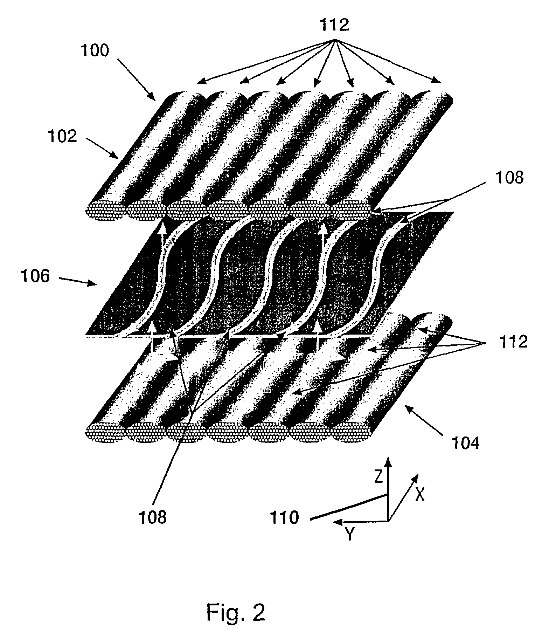

Figure 2 presents a diagrammatic perspective view of a moulding material according to an embodiment of the invention.

The moulding material 10 comprises a layer of a resin material 12 sandwiched between layers of unidirectional fibrous reinforcement material 14 whereby the reinforcement material 14 is conjoined to the surfaces of the resin material 12. As shown in Fig. 1, as the moulding material 10 is processed and the reinforcement material 14 starts to be wetted out by the resin 12, the resin 12 tracks through gaps in the reinforcement material first and areas 18 of the uni-directional fibre 14 become trapped off or blocked 20 so that no air transport can occur in directions 22 along the reinforcement fibre and perpendicular to the reinforcement fibre (x, y -direction and z -direction) . Any residual laminar gases inside the fibre tows get locked inside the tows which creates void areas in the cured product.

The preform moulding material 100 comprises a first and a second layer of a reinforcement material 102,104 comprising multiple uni-directional fibre tows 112, and a layer of a resin material 106 arranged between the reinforcement layers 102, 104. The resin material layer 106 comprises a first venting structure to allow gases to pass out of said moulding material 100 via the reinforcement layer 102,104 during processing. The first venting structure comprises venting channels or breaks in the resin film 108 which extend substantially in a plane perpendicular to the resin layer 106. The venting channels 108 also extend in a direction which is approximately parallel to the resin layer 106. In this way, the venting channels can extend in a zig-zag type fashion. This increases the volume of the channels which promotes the gas venting properties of the resin layer. The venting channels or resin breaks 108 create air flow in x, y and z-direction 110 from fibre tow 112 to fibre tow 112. Since the reinforcement material layers 102, 104 are essentially dry, the reinforcement layers 102, 104 comprise a further venting structure formed by the fibre tows to allow gases to pass out of said moulding material 100 via the reinforcement layers 102,104 during processing. The venting channels 108 provide transverse connections in the reinforcement material 102,104 to reconnect closed off areas of the reinforcement material during processing to allow venting of entrapped gases out of the moulding material.

In use, the moulding material is processed in the usual way by increasing the temperature of the resin material 106. Further, a vacuum pressure may be applied over the moulding material 100 to promote the evacuation of gases such as air from the moulding material 100, and to generally promote the flow of the reinforcement resin material 106 into the fibrous reinforcement material 102,104. The vacuum is applied by locating the laminate structure within an enclosure such as a vacuum bag and subsequently a proportion of the air is removed from the enclosure.

During processing, the resin material 106 impregnates the fibrous material 102, 104 whereby any entrapped air can escape, both in X-Y directions parallel to the plane of the reinforcement material, and perpendicular thereto in the Z direction. This is possible due to the venting channels 108 which are located within the resin film material 106. The venting channels then close as resin infusion into the reinforce material continues and the moulding material is further processed. This results in a cured product which is essentially void-free, thereby obviating the problems which were discussed hereinbefore and which are presented in Figure 1 of the drawings.

## Claims

1. A preform multi-layered moulding material comprising:-
a layer of a fibrous reinforcement material, and
a layer of a reinforcement resin material, the inherent tack of the reinforcement resin layer holding the fibrous reinforcement material in place, the reinforcement material being at least partially dry with respect to the reinforcement resin, **characterised in that** said reinforcement resin material comprises a first venting structure having venting channels for conducting gases in directions parallel to the plane of the reinforcement layer and perpendicular thereto to allow gases to pass out of the moulding material via the reinforcement layer during processing to prevent entrapment of gases.

2. A moulding material according to claim 1, **characterised in that** the reinforcement layer comprises a further venting structure for allowing gases to pass out of said moulding material via the reinforcement layer during processing.

3. A moulding material according to claim 2, **characterised in that** the further venting structure is formed by the reinforcement material.

4. A moulding material according to any of the preceding claims, **characterised in that** the venting channels vent interlaminar and/or intralaminar gases.

5. A moulding material according to claim 4, **characterised in that** the venting channels are defined between lengthwise extending strips of reinforcement resin material.

6. A moulding material according to any of the preceding claims, **characterised in that** the resin layer is discontinuous thereby forming the first venting structure.

7. A moulding material according to any of the preceding claims, **characterised in that** the reinforcement material is unimpregnated by the resin material or at least partially unimpregnated by the resin material to allow gases to pass out of the moulding material.

8. A moulding material according to any of the preceding claims, **characterised in that** the reinforcement material comprises a unidirectional reinforcement material or a non-uniform fibrous reinforcement material.

9. A method of manufacturing a preform multi-layered moulding material comprising the steps of:
providing a layer of a reinforcement material, and
providing a layer of a reinforcement resin material, said resin material comprising a venting structure to allow gases to pass out of the moulding material via the reinforcement layer during processing,
said method further comprising the step of locating said reinforcement material in relation to said resin layer, the inherent tack of the reinforcement resin layer holding the reinforcement material in place, such that during processing of the moulding material gases pass out of the moulding material via the reinforcement layer in directions parallel to the plane of the reinforcement layer and perpendicular thereto.

10. A method of forming a gas permeable resin material comprising the steps of providing a resin material, providing means for piercing said resin material, said method further comprising the step of providing a venting structure inside the resin material to allow gases to pass out of the resin material during processing by piercing the resin layer.

11. A method according to claim 10, **characterised in that** the method comprises the step of providing means for decreasing the viscosity of the resin material, said method further comprising the step of decreasing the viscosity of the resin material before forming the first venting structure.

12. A method according to claim 11, **characterised in that** the means for decreasing the viscosity of the resin comprise heating means.

13. A method according to claim 12, **characterised in that** the heating means is adapted to heat said resin material to a temperature whereby the viscosity of the resin layer is decreased and whereby no curing of the resin layer occurs

14. A method according to any of claims 10 to 13, **characterised in that** the resin material is in the form of a film or layer.

## Patentansprüche

1. Vorgefertigte vielschichtige Formmasse, umfassend:
eine Lage eines faserartigen Verstärkungsmaterials, und eine Lage eines Verstärkungsharzmaterials, wobei die dem Verstärkungsharzmaterial innewohnende Haftung das faserartige Verstärkungsmaterial an Ort und Stelle hält, wobei das Verstärkungsmaterial im Hinblick auf das Harzmaterial zumindest teilweise trocken ist, **dadurch gekennzeichnet, daß** das Verstärkungsharzmaterial eine erste Ventilationsstruktur aufweist, die mit Ventilationskanälen zur Führung von Gasen in parallel zur Ebene der Verstärkungslage liegenden Richtungen versehen ist, und die rechtwinklig dazu den Austritt von Gasen aus der Formmasse durch die Verstärkungslage hindurch während der Verarbeitung erlaubt, um den Einschluß von Gasen zu verhindern.

2. Formmasse nach Anspruch 1,
**dadurch gekennzeichnet, daß** die Verstärkungslage eine weitere Ventilationsstruktur aufweist, die den Austritt von Gasen aus der Formmasse durch die Verstärkungslage hindurch während der Verarbeitung erlaubt.

3. Formmasse nach Anspruch 2,
**dadurch gekennzeichnet, daß** die weitere Ventilationsstruktur durch das Verstärkungsmaterial gebildet ist.

4. Formmasse nach einem der vorhergehenden Ansprüche,
**dadurch gekennzeichnet, daß** die Ventilationskanäle interlaminare und/oder intralaminare Gase ventilieren.

5. Formmasse nach Anspruch 4,
**dadurch gekennzeichnet, daß** die Ventilationskanäle zwischen sich längs erstreckenden Streifen des Verstärkungsharzmaterials begrenzt sind.

6. Formmasse nach einem der vorhergehenden Ansprüche,
**dadurch gekennzeichnet, daß** die Harzlage diskontinuierlich ist und dabei die erste Ventilationsstruktur bildet.

7. Formmasse nach einem der vorhergehenden Ansprüche,
**dadurch gekennzeichnet, daß** das Verstärkungsmaterial durch das Harzmaterial unimprägniert oder zumindest teilweise unimprägniert ist, um den Austritt von Gasen aus der Formmasse zu erlauben.

8. Formmasse nach einem der vorhergehenden Ansprüche,
**dadurch gekennzeichnet, daß** das Verstärkungsmaterial ein unidirektionales Verstärkungsmaterial oder ein uneinheitliches faserartiges Verstärkungsmaterial aufweist.

9. Verfahren zur Herstellung einer vorgefertigten vielschichtigen Formmasse, welches folgende Schritte aufweist:
Bereitstellung einer Lage eines Verstärkungsmaterials, und
Bereitstellung einer Lage eines Verstärkungsharzmaterials, wobei das genannte Harzmaterial eine Ventilationsstruktur aufweist, die den Austritt von Gasen aus der Formmasse durch die Verstärkungslage hindurch während der Verarbeitung erlaubt,
wobei das Verfahren des weiteren den Schritt aufweist, das genannte Verstärkungsmaterial in Bezug auf die genannte Harzschicht zu positionieren, wobei die dem Verstärkungsharzmaterial innewohnende Haftung das Verstärkungsmaterial an Ort und Stelle hält, derart, daß während der Verarbeitung der Formmasse Gase aus der Formmasse durch die Verstärkungslage hindurch in Richtungen parallel zu der Ebene der Verstärkungslage und rechtwinklig dazu austreten.

10. Verfahren zur Bildung eines gasdurchlässigen Harzmaterials, umfassend die Schritte der Bereitstellung eines Harzmaterials, Bereitstellung von Mitteln zum Durchstechen des genannten Harzmaterials, wobei das genannte Verfahren des weiteren den Schritt der Bereitstellung einer Ventilationsstruktur innen im Harzmaterial umfaßt, um den Austritt von Gasen aus dem Harzmaterial während der Verarbeitung mittels Durchstechen der Harzlage zu erlauben.

11. Verfahren nach Anspruch 10,
**dadurch gekennzeichnet, daß** das Verfahren den Schritt der Bereitstellung von Mitteln zur Herabsetzung der Viskosität des Harzmaterials aufweist, wobei das genannte Verfahren des weiteren den Schritt der Herabsetzung der Viskosität des Harzmaterials vor der Bildung der ersten Ventilationsstruktur aufweist.

12. Verfahren nach Anspruch 11,
**dadurch gekennzeichnet, daß** die Mittel zur Herabsetzung der Viskosität des Harzmaterials Heizmittel aufweisen.

13. Verfahren nach Anspruch 12,
**dadurch gekennzeichnet, daß** die Heizmittel zum Aufheizen des genannten Harzmaterials auf eine Temperatur bei der die Viskosität der Harzlage herabgesetzt ist und bei der keine Härtung der Harzlage eintritt, angepaßt sind.

14. Verfahren nach einem der Ansprüche 10 bis 13,
**dadurch gekennzeichnet, daß** das Harzmaterial in Form eines Filmes oder einer Lage ist.

## Revendications

1. Matériau de moulage multicouche pour préforme comprenant :
une couche d'un matériau de renfort fibreux ; et
une couche d'un matériau de résine de renfort, l'adhérence inhérente à la couche de résine de renfort maintenant le matériau de renfort fibreux en place, le matériau de renfort étant au moins partiellement sec par rapport à la résine de renfort, **caractérisé en ce que** ledit matériau de résine de renfort comprend une première structure de ventilation ayant des canaux de ventilation pour conduire les gaz dans des directions parallèles au plan de la couche de renfort et perpendiculaires à celui-ci pour permettre aux gaz de sortir du matériau de moulage via la couche de renfort pendant le traitement pour éviter que les gaz ne soient capturés.

2. Matériau de moulage selon la revendication 1, **caractérisé en ce que** la couche de renfort comprend une structure de ventilation supplémentaire pour permettre aux gaz de sortir dudit matériau de moulage via la couche de renfort pendant le traitement.

3. Matériau de moulage selon la revendication 2, **caractérisé en ce que** la structure de ventilation supplémentaire est formée par le matériau de renfort.

4. Matériau de moulage selon l'une quelconque des revendications précédentes, **caractérisé en ce que** les canaux de ventilation ventilent des gaz interlaminaires et / ou intralaminaires.

5. Matériau de moulage selon la revendication 4, **caractérisé en ce que** les canaux de ventilation sont définis entre des bandes de matériau de résine de renfort s'étendant dans le sens de la longueur.

6. Matériau de moulage selon l'une quelconque des revendications précédentes, **caractérisé en ce que** la couche de résine est discontinue, formant ainsi la première structure de ventilation.

7. Matériau de moulage selon l'une quelconque des revendications précédentes, **caractérisé en ce que** le matériau de renfort n'est pas imprégné par le matériau de résine ou n'est au moins partiellement pas imprégné par le matériau de résine pour permettre aux gaz de sortir du matériau de moulage.

8. Matériau de moulage selon l'une quelconque des revendications précédentes, **caractérisé en ce que** le matériau de renfort comprend un matériau de renfort unidirectionnel ou un matériau de renfort fibreux non uniforme.

9. Procédé de fabrication d'un matériau de moulage multicouche pour préforme comprenant les étapes consistant à :
fournir une couche d'un matériau de renfort ; et
fournir une couche de matériau de résine de renfort, ledit matériau de résine comprenant une structure de ventilation pour permettre aux gaz de sortir du matériau de moulage via la couche de renfort pendant le traitement, ledit procédé comprenant en outre l'étape consistant à placer ledit matériau de renfort en relation avec ladite couche de résine, l'adhérence inhérente à la couche de résine de renfort maintenant le matériau de renfort en place, de sorte que pendant le traitement du matériau de moulage les gaz sortent du matériau de moulage via la couche de renfort dans des directions parallèles au plan de la couche de renfort et perpendiculaires à celui-ci.

10. Procédé de formation d'un matériau de résine perméable aux gaz, comprenant les étapes consistant à fournir un matériau de résine, fournir un moyen pour percer ledit matériau de résine, ledit procédé comprenant en outre l'étape consistant à fournir une structure de ventilation à l'intérieur du matériau de résine pour permettre aux gaz de sortir du matériau de résine pendant le traitement en perçant la couche de résine.

11. Procédé selon la revendication 10, **caractérisé en ce que** le procédé comprend l'étape consistant à fournir un moyen pour diminuer la viscosité du matériau de résine, ledit procédé comprenant en outre l'étape consistant à diminuer la viscosité du matériau de résine avant de former la première structure de ventilation.

12. Procédé selon la revendication 11, **caractérisé en ce que** le moyen destiné à diminuer la viscosité de la résine comprend un dispositif de chauffage.

13. Procédé selon la revendication 12, **caractérisé en ce que** le dispositif de chauffage est adapté pour chauffer ledit matériau de résine à une température à laquelle la viscosité de la couche de résine est diminuée et à laquelle il ne se produit pas de sèchement de la couche de résine.

14. Procédé selon l'une quelconque des revendications 10 à 13, **caractérisé en ce que** le matériau de résine revêt la forme d'un film ou d'une couche.
